# EUROPEAN PATENT SPECIFICATION

(11) **EP 2 131 057 B1**
(45) Date of publication and mention of the grant of the patent: **12.01.2011**
(21) Application number: 08157641.5
(22) Date of filing: 05.06.2008
(51) Int. Cl.: F16D 65/38, F16D 65/56

(54) **Adjusting device for a drum brake**
Einstellungsvorrichtung für eine Trommelbremse
Dispositif de réglage pour frein à tambour

(43) Date of publication of application: 09.12.2009
(73) Proprietor: IVECO MAGIRUS AG, 89079 Ulm (DE)
(72) Inventor: Neuburger, Hans, 89160, Dornstadt (DE); Sick, Gerhard, 89275, Elchingen (DE)
(74) Representative: Borsano, Corrado

(56) References cited:
- DE-A1- 2 703 891
- DE-A1- 19 858 319
- GB-A- 1 418 629
- GB-A- 2 006 355

## Description

The present invention concerns an adjusting device for a drum brake according to the preamble of claim 1. Such a device is for instance known from 4B-A-2 006 355.

In the vehicle manufacturing industry, drum brakes have been known of in the prior art, in various embodiments, for considerable time. The brake shoes disposed inside the drum brake, which carry the brake linings, are, for example, hydraulically pressed against the insides of the drum. The transfer of force can be effected by pistons, which absorb the pressure on their rear side and transfer it to the brake linings. A hydraulically driven expansion wedge can, for example, drive apart two pistons disposed on an axle, which then move in opposite directions, thereby driving the brake linings apart.

For safety reasons, it is very important that the brake lining be correctly distanced from the brake drum. This distance can, however, alter due to, for example, wear and tear on the brake linings. Hence the pistons are not generally made in one piece, but are formed by piston units comprised of several parts, so that the length of the piston unit can be adjusted. In one conventional form of construction, a bolt is inserted into an unscrewed piston sleeve, and the bolt head projects out of the piston sleeve. The depth of insertion of the bolt into the piston sleeve can be adjusted by rotating the bolt in relation to the non-rotating piston sleeve. For this purpose, the inserted end of the bolt is provided with an outer thread which is screwed into a corresponding inner thread of an adjusting sleeve inserted inside the piston sleeve. This adjusting sleeve is part of a self-adjusting mechanism which, after the piston unit covers a large distance between the resting position and the contact of the brake lining against the brake drum, causes the bolt to be screwed slightly out of the adjusting sleeve, thereby lengthening the piston unit as a whole and reducing the distance between brake lining and brake drum to compensate for wear.

To a certain extent, this self-adjustment repeatedly takes place during braking cycles when the vehicle is in operation. Occasionally, manual adjustment of the length of the piston unit may be necessary. This may, in particular, be the case during maintenance work, when changing the brake linings, for example. To facilitate such manual adjustment, i.e. to allow the bolt to be rotated inside the piston unit, or inside the adjusting sleeve mounted inside the latter, the bolt head is contrived to allow a turning tool to engage with it. This purpose is served by a gear wheel, into which the end of a suitable tool can be inserted, and by means of which torque can be transferred to the bolt.

To ensure the piston unit remains at the set length, the rotation position of the piston is secured by at least one sliding cam, which interacts positively with the gear wheel. By means of a spring mounted on the head, the sliding cam is held in the gear wheel and the bolt is fixed in its rotation position. The spring force is selected to exclude all possibility of de-adjustment whilst the vehicle is in operation, whilst still permitting the teeth to slide over the sliding cam when the bolt is rotated using the adjusting tool.

In the conventional construction, the front end of the bolt head impacts directly against the inside of the brake lining. In this case, the sliding cam which prevents the bolt from unscrewing is located on a clip mounted elastically to the side of the head of the bolt, and whose front end projects through a recess. The clip is held non-rotationally by its edges so that it cannot rotate unintentionally with the bolt, the latter fitting inside the clip relatively immovably. Torque can only be transferred to the bolt by means of a tool inserted at the side through the clip, to engage with the gear wheel. When the bolt rotates, its head slides inside the clip, over the sliding cam, allowing the length of the piston unit to be adjusted.

There are a number of disadvantages to this configuration.

The free contact surface at the front end of the bolt is relatively small, and therefore suffers a lot of wear. In particular, this wear may be uneven across the contact surface. In this case, when contact occurs, torque is exerted on the bolt and facilitates de-adjustment of the length of the piston unit. A similar problem arises when contacting components exhibit manufacturing faults which lead to an irregular, i.e. uneven, for example, shaping of the front end.

Another problem relates to the accessibility of the gear wheel, which is made more difficult by the geometry of the clip, which grips the head on both sides. As a general rule, the adjusting tool can only be inserted into the gear wheel with difficulty, and exercising a higher degree of torque via the gear wheel often proves difficult as the configuration does not offer sufficient support for the tool during rotation.

The task of this invention is therefore to create an adjusting device for drum brakes of the aforementioned type, which reliably prevents de-adjustment of the length of the piston unit while the brake is in operation, whilst simultaneously facilitating manual adjustment.

According to the invention, this task is solved by an adjusting device with the features of claim 1.

According to the invention, the front end of the head of the bolt is covered by a plate which is non-rotationally disposed in relation to the bolt. This plate is a forging or casting. Sliding cam(s) is/are moulded onto its inner surface facing the bolt. The head with the gear wheel can therefore slide rotatably on the inner surface of the plate, so that the teeth move past sliding cams.

The spring is disposed in such a way that the front end of the head of the bolt is pressed against the inner surface of the plate. As in the conventional devices too, the spring pressure ensures that the gear wheel can only move past sliding cams if a high degree of torque is exerted. Such torque does not occur during normal vehicle operation, so de-adjustment is reliably prevented.

Unlike the conventional spring clip, the spring need not, however, extensively grip around the head from two opposite sides; it is sufficient if the spring simply grips the edge of the plate and presses the head of the bolt against the plate with a radially further inwardly located spring part. In this construction, the contact surface with the brake lining is formed by the plate positioned between the brake lining and the bolt head. This means the contact surface can be made considerably larger. This reduces wear. Because of this intermediate plate, torque which might provoke de-adjustment cannot occur at the head of the bolt. A positive lock can occur at the intermediate plate and the bolt head during braking.

Attaching the plate with the spring envisaged on it provides greater constructive freedom. In particular, the edge of the one-piece plate can offer support when torque is exerted by an adjusting tool inserted into the gear wheel. Depending on the configuration of the plate, an opening in the plate edge may have to be provided for this purpose, to accommodate the end of the tool. This facilitates the manual adjusting process.

In one preferred form of embodiment, the plate has, at its edge, a recess to allow a tool to be inserted into the gear wheel from the side.

Furthermore, the inner surface of the plate is preferably limited around its peripheral edge by a guide rib which encloses the gear wheel and is interrupted by the recess.

This guide rib provides guidance for the bolt head, which rests against the inner surface of the plate. This retains the bolt more effectively on its axis of rotation.

In another preferred embodiment, the plate is provided on its outer surface facing the braking lining with a longitudinal groove which extends across the plate and is intended to accommodate the brake lining or a part rigidly connected thereto.

This guide groove forms the contact surface between the plate and the brake lining. The width and length of the groove may be chosen in line with the given circumstances. The lateral guide between brake lining and bolt is improved by engagement in the groove.

The spring preferably comprises an approximately ring-shaped part which encloses the shaft of the bolt behind its head, from whose edge stirrups extend which engage behind the edge of the plate and elastically pretension the ring-shaped part in the direction of the plate.

In doing so, the spring only grips around the edge of the plate by its stirrups, but does not extend far across the side of the plate facing the brake lining. The ring-shaped part of the spring, however, reliably presses the gear wheel against the inner surface of the plate with the cam, so that for the purpose of manual adjustment, the gear wheel has to be slightly lifted in relation to the plate so that one tooth can be moved over the cam at a time.

In another preferred embodiment, the end of the bolt inserted into the piston sleeve is provided with an external thread which is screwed into an adjusting sleeve, which is in turn slidingly inserted into the piston sleeve.

This adjusting sleeve may be part of a self-adjusting mechanism which, when the brake lining becomes worn, restores the desired distance between the brake lining and the inside of the drum brake, required for safety reasons. For this purpose, the adjusting sleeve is provided with an outer toothed profile with which a pin engages, the pin being mounted on the outside of the piston sleeve and projecting sideways into the sleeve. If the piston unit moves from the inside against the brake lining, the pin is slightly dislodged from its engagement with the toothed profile of the adjusting sleeve. If the distance travelled by the piston unit is relatively short, the pin slides back into the same position in the gear wheel when the piston unit moves backwards after the braking process. But if a certain distance is exceeded, the pin slides one tooth further in the toothed profile of the adjusting sleeve. The toothed profile is contrived so that, during the backward movement, the adjusting sleeve is slightly rotated relative to the bolt, via the thread engagement, so that the piston unit lengthens as a whole. In this way, any increase in the distance between brake lining and brake drum is compensated by a corresponding self-adjustment to lengthen the piston unit.

Examples of preferred embodiments of the invention will be described in more detail below, with reference to the enclosed drawings, in which
- Fig. 1: is a perspective exploded view of key parts of an embodiment of the adjusting device according to the invention;
- Fig. 2: shows the parts of the adjusting device of Fig. 1 in assembled state;
- Fig. 3: shows a side view of the configuration of Fig. 2; and
- Fig. 4 and 5: are perspective views of the plate of the adjusting device according to the invention, seen from different sides.

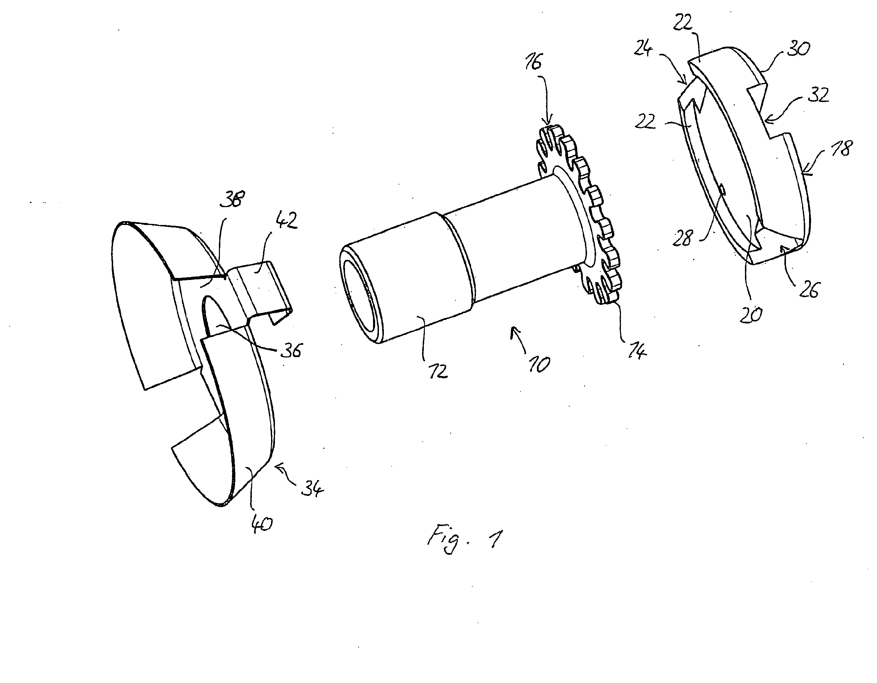

Fig. 1 shows parts of an adjusting device for a drum brake, allowing adjustment of the distance of a brake lining disposed inside the brake drum from the inside wall of the brake drum. For the sake of clarity, brake lining and brake drum are not shown in the Figures.

The adjusting device comprises, in particular, a piston unit with adjustable length, provided to transfer a braking force exerted on the back of the piston unit to the brake lining, and to move the brake lining against the brake drum. Part of the piston unit is formed by the bolt 10 shown in the middle of Fig. 1, which has an outer thread 12 at one end and a gear rim 14 at the opposite end, which extends around the cylindrical lateral surface of piston 10. The end of piston 10 with the gear rim 14 will be referred to below as the head 16.

The end of bolt 10 with thread 12 is intended to be inserted into a piston sleeve, which is not shown here, in such a way that head 16 projects out of the piston sleeve. In the customary arrangements, the outer thread 12 of bolt 10 is screwed into the inner thread of an adjusting sleeve inserted into the piston sleeve in a way that allows axial movement. Together with the piston sleeve, the adjusting sleeve may form a self-adjusting mechanism which causes bolt 10 to be screwed further out of the adjusting sleeve as soon as the axial path of the piston unit to the inner wall of the brake drum exceeds a predetermined length, i.e. the distance between the brake lining and the brake drum becomes too great. In this way, the length of the piston unit is altered by changing the depth of insertion of bolt 10 in the piston sleeve, by screwing bolt 10, by means of its outer thread 12, inside the piston sleeve. A self-adjusting mechanism of this type belongs to the prior art and is not the object of this invention.

The option also exists of manually altering the depth of insertion of bolt 10 by transferring torque to bolt 10 via gear rim 14, to screw the former out of, or into, the piston unit by its outer thread 12. Such manual adjustment can be necessary for maintenance purposes or when changing the brake linings, for example. On the other hand, safety reasons necessitate that the bolt 10 does not de-adjust itself during normal operation of the vehicle in which the drum brake is fitted. The adjusting device is therefore fitted with an anti-rotation device for bolt 10, which will be described below.

Head 16 has a flat front end facing the brake lining. A plate 18, contrived as a forging or casting, abuts against this front end. The inner surface 20 of plate 18, which faces the front end of head 16, is essentially circular, flat and smooth, so that the front end of head 16 can slide on the inner surface 20 of plate 18 while bolt 10 rotates. During this rotation, gear rim 14 is held in a guide rib 22 of plate 18, which limits the edge of inner surface 20 at the side. As will be described in more detail below, guide rib 22 is interrupted at two opposite points by recesses 24,26 to allow gear rim 14 to be gripped from the side by an adjusting tool in the position in which it is encompassed by guide rib 22.

Close to guide rib 22, the inner surface 20 of plate 18 is provided with a sliding cam 28, i.e. an approximately dome-shaped elevation of low height. Sliding cam 28 is disposed so that, when bolt 10 and plate 18 are assembled, sliding cam 28 rests between two teeth on gear rim 14.

On the outer surface 30 facing the brake lining, plate 18 is provided with a longitudinal groove 32, which extends across the entire diameter of plate 18, i.e. crosswise to the axial direction of bolt 10, across plate 18. This groove 32 accommodates the inside of the brake lining or a brake component that carries the braking lining. Brake lining and plate 18 are thus non-rotationally connected. Hence plate 18 is also non-rotationally disposed in the brake in relation to bolt 10.

The connection between bolt 10 and plate 18 is assured by a spring 34, which is approximately ring or plate-shaped, and has a central opening 36, in which the shaft of bolt 10 is inserted. A ring-shaped part 38 of spring 34, which encloses opening 36, is provided to abut flush with the surface of gear rim 14 positioned opposite plate 18. The edge of this flat, ring-shaped part 38 adjoins a truncated-cone-shaped edge portion 40 of spring 34, which is interrupted by indentations at two opposite peripheral points. At the positions of these indentations, stirrups 42 project from the edge of the ring-shaped part 38, which extend in the direction of gear rim 14 and have inwardly angled ends, so that stirrups 42 are hook-shaped. The truncated-cone-shaped edge portion 40 of spring 34 serves to protect a seal disposed on the side of spring 34 furthest from plate 18. This seal is not shown in more detail in the figures.

To assemble the entire arrangement shown in Fig. 1, the head 16 of bolt 10 fits inside plate 18 in such a way that the front end of head 16 abuts against the inner surface 20 of plate 18. In this case, and as already described, gear rim 14 is rotatably held between the parts of guide rib 22. From the opposite end of bolt 10, spring 34 can be pushed over external thread 12 onto the shaft of bolt 10 until the flat, ring-shaped part 38 of spring 34 rests against gear rim 14. Whilst being pushed on, stirrups 42 are pushed outwards so that they slide over the outer edge of plate 18 and engage in the ends of longitudinal groove 32 on the outer surface 30 of plate 18.

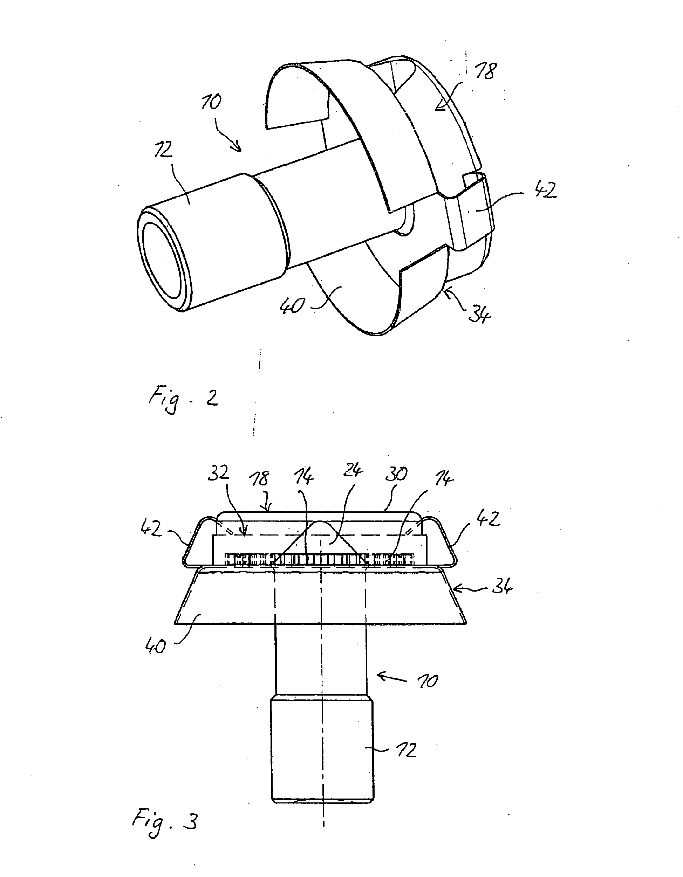

This assembled position is shown in Fig. 2. Spring 34 holds bolt 10 and plate 18 together in such a way that bolt 10 can only rotate in relation to plate 18 against the resistance of cam 28. During vehicle operation, and in particular when activating the brake, the torque generated by the brake lining as a result of external contact is not transmitted to bolt 10. The latter is prevented from unscrewing by means of the clamping force with gear rim 14 and cam 28, and by groove 32 with the brake lining. Unscrewing is only possible manually, in an unstressed state, with the help of an adjusting tool. The end of this tool can be inserted through one of recesses 24 or 26 in the edges of plate 18 into the teeth of gear rim 14.

This tool may be, for example, an ordinary screwdriver. If it is rotated, the torque is transmitted to gear rim 14 and bolt 10, whilst the screwdriver is, at the same time, supported by the walls of the respective recess 24,26 as an abutment. Bolt 10 is thus rotated relative to the piston sleeve and moves, depending on the direction of rotation, into or out of the piston sleeve, so that the length of the piston unit can be adjusted as desired.

Virtually the entire base surface of groove 32 on plate 18 is available for contact with the brake lining. Direct contact between the brake lining and the front end of bolt 10 is avoided so that uneven contact, caused by an irregular contact surface, cannot cause unwanted torque to be exerted on bolt 10 during the braking process. It is not necessary, therefore, to make the bolt 10 from a hardened material to avoid excessive wear, as was previously the case in the state of the art.

Fig. 3 shows the arrangement of Fig. 2 in a side view, in which it is clear how gear rim 14 rests inside plate 18, with the hook-shaped stirrups 42 of spring 34 engaging behind its edges. It is obvious that the pressure exerted on gear rim 14 by spring 34 should be appropriately chosen, so that the teeth of gear rim 14 can only move past cam 28 when a large amount of torque is applied to bolt 10.

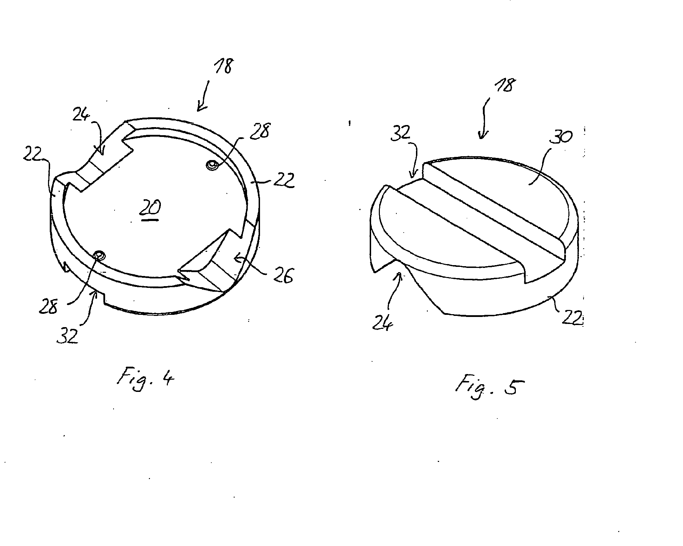

Fig. 4 shows the solid plate 18 from underneath. In this view it can be seen that a second, identically formed cam 28 is positioned opposite cam 28. The number and shape of cams 28 are to be chosen in accordance with the desired properties of the adjusting device. Cams 28 may optionally also be disposed on spring 34.

Further, recesses 24 and 26 in the edge of plate 18 can clearly be seen in Fig. 4. The recesses are contrived as V-shaped notches to offer sufficient resistance to support the adjusting tool to be inserted into the gear wheel.

Fig. 5 shows, in addition to the V-shaped indentations as recesses 24,26, the path of groove 32 on the outer surface 30 of plate 18. As can be seen quite clearly, groove 32 has a rectangular cross-section which remains the same over the entire path of groove 32.

## Claims

1. Adjusting device for a drum brake, with a piston unit for pressing a brake lining against the inside of the brake drum, said piston unit comprising a piston sleeve and a bolt (10) rotatably inserted inside the piston sleeve, whose head (16) faces the brake lining and projects out of the piston sleeve and whose depth of insertion in the piston sleeve can be adjusted by rotating bolt (10) inside the piston sleeve, said bolt having a gear wheel (14) at the circumference of its head (16), which, for the purpose of fixing the rotation position of bolt (10), interacts positively with at least one non-rotationally disposed cam (28), and is held in engagement with cam (28) by the pressure exerted by a spring (34) attached to head (16), **characterised by** a plate (18) which covers the front end of the head (16) of bolt (10) and is non-rotationally disposed in relation to bolt (10), said plate (18) being formed as a forging or casting, with spring (34) disposed to press the front end of the head (16) of bolt (10) against an inner surface (20) of plate (18) and the cam or cams (28) being moulded onto the inner surface (20) of plate (18) and/or onto spring (34).

2. The adjusting device of claim 1, **characterised in that** plate (18) has, around its edge, at least one recess (24,26) for a tool to be inserted into gear wheel (14) from the side.

3. The adjusting device of claim 2, **characterised in that** the inner surface (20) of plate (18) is limited around its circumferential edge by a guide rib (22) which encloses gear wheel (14) and is interrupted by recesses (24,26).

4. The adjusting device of one of the preceding claims, **characterised in that** plate (18) is provided on its outer surface (30) facing the brake lining with a longitudinal groove (32) which extends across plate (18) and is intended to accommodate the brake lining, or a component rigidly connected thereto.

5. The adjusting device of one of the preceding claims, **characterised in that** spring (34) comprises an approximately ring-shaped part (38) which encircles the shaft of bolt (10) behind its head, and from whose edge extend stirrups (42), which engage behind the edge of plate (18) and elastically pretension the ring-shaped part (38) in the direction of plate (18).

6. The adjusting device according to one of the preceding claims, **characterised in that** the end of bolt (10) inserted into the piston sleeve has an external thread (12) which is screwed inside an adjusting sleeve, which is in turn slidingly inserted in the piston sleeve.

## Patentansprüche

1. Einstellungsvorrichtung für eine Trommelbremse mit einer Kolbeneinheit, um einen Bremsbelag gegen die Innenseite der Bremstrommel zu drücken, wobei die Kolbeneinheit eine Kolbenhülse und einen drehbar in die Kolbenhülse eingeführten Bolzen (10) umfasst, dessen Kopf (16) dem Bremsbelag gegenüberliegt und von der Kolbenhülse hervorsteht und dessen Einführungstiefe in die Kolbenhülse durch die Drehung des Bolzens (10) innerhalb der Kolbenhülse eingestellt werden kann, wobei der Bolzen ein Zahnrad (14) an dem Umfang seines Kopfes (16) aufweist, welches, für den Zweck die Drehposition des Bolzens (10) zu fixieren, kraftschlüssig mit wenigstens einer nicht drehbar angeordneten Nocke (28) interagiert ist, und mit der Nocke (28) durch Druck, der durch eine an dem Kopf (16) befestigte Feder (34) ausgeübt wird, in Verbindung gehalten wird, **gekennzeichnet durch** eine Platte (18), welche das vordere Ende des Kopfes (16) des Bolzens (10) abdeckt und in Bezug auf den Bolzen (10) nicht drehbar angeordnet ist, wobei die Platte (18) als ein Schmiedeteil oder Gussteil ausgebildet ist" wobei eine Feder (34) angeordnet ist, um das vordere Ende des Kopfes (16) des Bolzens (10) gegen eine Innenfläche (20) der Platte (18) zu drücken, und wobei die Nocke oder Nocken (28) auf der Innenfläche (20) der Platte (18) und/oder auf der Feder (34) ausgeformt ist/sind.

2. Einstellungsvorrichtung nach Anspruch 1, **dadurch gekennzeichnet, dass** die Platte (18) um ihren Rand wenigstens eine Aussparung (24, 26) für eine Werkzeug aufweist, das in das Zahnrad (14) von der Seite eingeführt werden soll.

3. Einstellungsvorrichtung nach Anspruch 2, **dadurch gekennzeichnet, dass** die Innenfläche (20) der Platte (18) um ihren umlaufenden Rand durch eine Führungsrippe (22) begrenzt ist, welche das Zahnrad (14) einfasst und durch die Aussparungen (24, 26) unterbrochen ist.

4. Einstellungsvorrichtung nach einem der vorhergehenden Ansprüche, **dadurch gekennzeichnet, dass** die Platte (18) an ihrer Außenseite (30), die dem Bremsbelag gegenüberliegt, mit eine Längsnut (32)versehen ist, die sich über die Platte (18) erstreckt und die dafür gedacht ist, den Bremsbelag oder eine damit fest verbundene Komponente aufzunehmen.

5. Einstellungsvorrichtung nach einem der vorhergehenden Ansprüche, **dadurch gekennzeichnet, dass** die Feder (34) ein nahezu ringförmiges Teil (38) umfasst, welches den Schaft des Bolzens (10) hinter seinem Kopf umgibt, und von deren Rand sich Bügel (42) erstrecken, welche hinter dem Rand der Platte (18) einrasten und das ringförmige Teil (38) in die Richtung der Platte (18) elastisch vorspannen.

6. Einstellungsvorrichtung nach einem der vorhergehenden Ansprüche, **dadurch gekennzeichnet, dass** das Ende des Bolzens (10), das in die Kolbenhülse eingeführt ist, ein Außengewinde (12) aufweist, das innerhalb einer Einstellhülse eingeschraubt wird, welche wiederum gleitbar in die Kolbenhülse eingeführt wird.

## Revendications

1. Dispositif de réglage pour un frein à tambour, avec une unité de piston pour comprimer une garniture de frein contre l'intérieur du tambour de frein, ladite unité de piston comprenant un manchon de piston et un boulon (10) inséré de manière rotative à l'intérieur du manchon de piston, dont la tête (16) fait face à la garniture de frein et fait saillie du manchon de piston et dont la profondeur d'insertion dans le manchon de piston peut être réglée en faisant tourner le boulon (10) à l'intérieur du manchon de piston, ledit boulon ayant une roue dentée (14) au niveau de la circonférence de sa tête (16), qui, afin de déterminer la position de rotation du boulon (10), interagit positivement avec au moins une came (28) disposée de manière non rotative, et est maintenue en mise en prise avec la came (28) par la pression exercée par un ressort (34) fixé sur la tête (16), **caractérisé par** une plaque (18) qui recouvre l'extrémité avant de la tête (16) du boulon (10) et est disposée de manière non rotative par rapport au boulon (10), ladite plaque (18) étant formée comme un forgeage ou un moulage, avec le ressort (34) disposé pour comprimer l'extrémité avant de la tête (16) du boulon (10) contre une surface interne (20) de la plaque (18) et la came ou les cames (28) étant moulée(s) sur la surface interne (20) de la plaque (18) et/ou sur le ressort (34).

2. Dispositif de réglage selon la revendication 1, **caractérisé en ce que** la plaque (18) a, autour de son bord, au moins un évidement (24, 26) pour un outil à insérer dans la roue dentée (14) à partir du côté.

3. Dispositif de réglage selon la revendication 2, **caractérisé en ce que** la surface interne (20) de la plaque (18) est limitée autour de son bord circonférentiel par une nervure de guidage (22) qui enferme la roue dentée (14) et est interrompue par des évidements (24, 26).

4. Dispositif de réglage selon l'une quelconque des revendications précédentes, **caractérisé en ce que** la plaque (18) est prévue sur sa surface externe (30) faisant face à la garniture de frein avec une rainure longitudinale (32) qui s'étend en travers de la plaque (18) et est prévue pour loger la garniture de frein, ou un composant rigidement raccordé à cette dernière.

5. Dispositif de réglage selon l'une quelconque des revendications précédentes, **caractérisé en ce que** le ressort (34) comprend une partie de forme approximativement annulaire (38) qui encercle la tige du boulon (10) derrière sa tête, et à partir duquel bord s'étendent des étriers (42) qui se mettent en prise derrière le bord de la plaque (18) et prétendent élastiquement la partie de forme annulaire (38) dans la direction de la plaque (18).

6. Dispositif de réglage selon l'une quelconque des revendications précédentes, **caractérisé en ce que** l'extrémité du boulon (10) insérée dans le manchon de piston a un filetage externe (12) qui est vissé à l'intérieur d'un manchon de réglage, qui est à son tour inséré de manière coulissante dans le manchon de piston.
